# EUROPEAN PATENT APPLICATION

(11) **EP 3 933 876 A1**
(43) Date of publication of application: **05.01.2022**
(21) Application number: 19917321.2
(22) Date of filing: 19.03.2019
(51) Int. Cl.: H01H 47/02

(54) **CONTROL METHOD AND CONTROL DEVICE**

(30) Priority: 28.02.2019 CN 201910151300
(71) Applicant: Schneider Electric Industries SAS, 92500 Rueil-Malmaison (FR)
(72) Inventor: CHEN, Jiamin, Shanghai 201203 (CN); SHUANG, Bing, Shanghai 201203 (CN); TIAN, Simon, 38050 Grenoble (FR); MOLITON, Vivien, 38050 Grenoble (FR); CHENG, Ying, Shanghai 201203 (CN); LIU, Hanyi, Shanghai 201203 (CN); SHEN, Jiali, Shanghai 201203 (CN); FU, Yangjian, Shanghai 201203 (CN); ZHAO, Haijun, Shanghai 201203 (CN)
(74) Representative: Manitz Finsterwald Patent- und Rechtsanwaltspartnerschaft mbB
(86) International application number: PCT/CN2019/078717
(87) International publication number: WO 2020/172924

(57) **Abstract**

A control method and a control device (100). The control device (100) is connected to an external load (200), and comprises: a power module (120); a microcontroller unit (110) for receiving an input command, a power control output terminal (c1) of the microcontroller unit (110) being connected to a control input terminal (o2) of the power module (120); a control circuit (130), a signal input terminal (s2) of the control circuit (130) being connected to a signal output terminal (c2) of the microcontroller unit (110); and a relay (140) having a contact, a power input terminal (p0) of the relay (140) being connected to a power output terminal (o1) of the power module (120), a control input terminal (p1) of the relay (140) being connected to a signal output terminal (s3) of the control circuit (130), a signal output terminal (p2) of the relay (14) being connected to an input terminal (m1) of the external load (200), a control signal of the control input terminal (p1) controlling the contact to be closed or opened, and the signal output terminal (p2) of the relay (140) outputting a state control signal to the external load (200) when the contact is closed, wherein a level conversion circuit (150) is further provided between the microcontroller unit (110) and the control circuit (130), a signal input terminal (v1) of the level conversion circuit (150) is connected to the signal output terminal (c2) of the microcontroller unit (110), and a pulse output terminal (v2) of the level conversion circuit (150) is connected to the signal input terminal (s2) of the control circuit (130).

## Description

### CROSS REFERENCE TO RELATED APPLICATIONS

This application claims priority to Chinese Patent Application No. 201910151300.2 filed on February 28, 2019, which is incorporated herein by reference in their entirety as a part of this application.

### TECHNICAL FIELD

The present disclosure relates to a field of control, and more specifically to a control method and a control device.

### BACKGROUND

With the development of industrial control and commercial control, relays, especially bi-stable relays, as electronic control means, are widely used in automatic control devicees to realize functions of automatic adjustment, safety protection, and circuit conversion. The control devicees realize control of external load circuits by controlling working states of the relays.

In a current control device, a micro-control unit transmits, corresponding to control of open and closed states of relay contacts, a control signal to a control circuit to control coils of the relay and drive the state of the contacts to reverse. But in this case, firstly, there may be a situation where the control circuit receives a turn-on control signal and a turn-off control signal that are mutually exclusive at the same time, which leads to short-circuiting of a unilateral arm of the control circuit; secondly, when the control signal transmitted by the micro-control unit is a long-term high-level signal, the relay coils will burn out; finally, when only one control signal is transmitted to control the relay, especially when the relay contacts are stuck, a failure rate of the relay without corresponding actions is high, resulting in a low reliability of control.

Therefore, it is necessary to provide a reliable control device to optimize the control process and realize effective control of external loads.

### SUMMARY OF THE DISCLOSURE

The present disclosure proposes a control method and control device in response to the above-mentioned problems and requirements, which can overcome the technical problems mentioned in the background by adopting the features described below, and has other advantages that will be introduced below.

According to a first aspect of the present disclosure, a control device is proposed, the control device being connected with an external load and comprising: a power module; a micro-control unit that receives an input command and has a power control output terminal connected to a control input terminal of the power module; a control circuit with a signal input terminal connected to a signal output terminal of the micro-control unit; a relay with contacts, a power input terminal connected to a power output terminal of the power module, a control input terminal connected to a signal output terminal of the control circuit, and a signal output terminal connected to an input terminal of the external load, a control signal of the control input terminal controlling the contacts to be in a closed state or an open state, and when the contacts are in the closed state, the signal output terminal of the relay outputting a state control signal to the external load; wherein a level conversion circuit is further provided between the micro-control unit and the control circuit, a signal input terminal of the level conversion circuit is connected to a signal output terminal of the micro-control unit, and a pulse output terminal of the level conversion circuit is connected to the signal input terminal of the control circuit, which is configured to convert the control signal from the micro-control unit into a pulse signal, and a duration of an effective level of the pulse signal is less than a pulse time threshold.

According to an alternative embodiment of the first aspect of the present disclosure, when the input command is a turn-on command, the micro-control unit continuously transmits a plurality of turn-on control signals to the level conversion circuit at a predetermined time interval, the level conversion circuit receives the plurality of continuous turn-on control signals and continuously transmits a plurality of turn-on pulse signals to the control circuit at a predetermined time interval, the control circuit receives the plurality of continuous turn-on pulse signals and continuously transmits a plurality of turn-on signals to the relay, and the relay turns on the contacts of the relay in response to the plurality of continuous turn-on signals.

According to an alternative embodiment of the first aspect of the present disclosure, when the input command is a turn-off command, the micro-control unit continuously transmits a plurality of turn-off control signals to the level conversion circuit at a predetermined time interval, the level conversion circuit receives the plurality of continuous turn-off control signals and continuously transmits a plurality of turn-off pulse signals to the control circuit at a predetermined time interval, the control circuit receives the plurality of continuous turn-off pulse signals and continuously transmits a plurality of turn-off signals to the relay, and the relay turns off the contacts of the relay in response to the plurality of continuous turn-off signals.

According to an alternative embodiment of the first aspect of the present disclosure, the signal output terminal of the micro-control unit includes a turn-on signal output terminal and a turn-off signal output terminal, the signal input terminal of the level conversion circuit includes a turn-on signal input terminal and a turn-off signal input terminal, and an interlock circuit is further provided between the micro-control unit and the level conversion circuit, wherein a turn-on signal input terminal and a turn-off signal input terminal of the interlock circuit are respectively connected to the turn-on signal output terminal and the turn-off signal output terminal of the micro-control unit, a turn-on signal output terminal and a turn-off signal output terminal of the interlock circuit are respectively connected to the turn-on signal input terminal and the turn-off signal input terminal of the level conversion circuit, and at least one of the turn-on signal output terminal and the turn-off signal output terminal of the interlock circuit is in a locked state without outputting a control signal.

According to an alternative embodiment of the first aspect of the present disclosure, when the turn-on signal input terminal receives a turn-on control signal, the turn-on signal output terminal works during the turn-on control signal, and the interlock circuit locks the turn-off signal output terminal so that the turn-off signal output terminal will not output a control signal; when the turn-off signal input terminal receives a turn-off control signal, the turn-off signal output terminal works during the turn-off control signal, and the interlock circuit locks the turn-on signal output terminal so that the turn-on signal output terminal will not output a control signal; when a turn-on control signal is received at the turn-on signal input terminal and a turn-off control signal is received at the turn-off signal input terminal at the same time, the interlock circuit locks the turn-on signal output terminal and the turn-off signal output terminal, so that neither the turn-on signal output terminal nor the turn-off signal output terminal outputs a control signal.

According to an alternative embodiment of the first aspect of the present disclosure, wherein the control device further comprises a detection circuit, wherein a detection output terminal of the detection circuit is connected to a feedback input terminal of the micro-control unit, and a detection input terminal of the detection circuit is connected to a detection terminal of the external load, and the detection circuit is configured to feed back a state of the external load to the micro-control unit.

According to an alternative embodiment of the first aspect of the present disclosure, the micro-control unit determines whether the received state of the external load is consistent with an expected state of a current control signal of the micro-control unit, and when it is determined that the state of the external load is inconsistent with the expected state of the current control signal of the micro-control unit, the micro-control unit transmits error information to a main control unit.

According to an alternative embodiment of the first aspect of the present disclosure, the micro-control unit determines whether the received state of the external load is consistent with the expected state of the current control signal of the micro-control unit, and when it is determined that the state of the external load is inconsistent with the expected state of the current control signal of the micro-control unit: the micro-control unit compares a number of transmission times of the current control signal with a preset transmission threshold, and if the number of transmission times of the current control signal is less than the preset transmission threshold, the micro-control unit outputs a signal to the power module to increase an output voltage, the power module increases the voltage output to the relay in response to the signal; and the micro-control unit transmits the current control signal to the control circuit again.

According to an alternative embodiment of the first aspect of the present disclosure, if the number of transmission times of the current control signal is greater than or equal to the preset transmission threshold, the micro-control unit transmits the error information to the main control unit.

According to a second aspect of the present disclosure, a control method is proposed, the method comprising: receiving an input command, and generating a corresponding control signal based on the input command; generating a corresponding pulse signal based on the control signal, a duration of an effective level of the pulse signal is less than a pulse time threshold; controlling contacts of a relay to be in a closed state or an open state based on the pulse signal, and when the contacts are in the closed state, outputting, by the relay, a state control signal to an external load.

According to an alternative embodiment of the second aspect of the present disclosure, when the input command is a turn-on command, a plurality of turn-on control signals are generated and the plurality of turn-on control signals are continuously transmitted at a predetermined time interval to turn on the contacts of the relay.

According to an alternative embodiment of the second aspect of the present disclosure, when the input command is a turn-off command, a plurality of turn-off control signals are generated and the plurality of turn-off control signals are continuously transmitted at a predetermined time interval to turn off the contacts of the relay.

According to an alternative embodiment of the second aspect of the present disclosure, the method further comprises: acquiring a state of the external load; determining whether the state of the external load is consistent with an expected state of a current input command.

According to an alternative embodiment of the second aspect of the present disclosure, when the state of the external load is inconsistent with the expected state of the current input command, and in a case that a number of transmission times of the current control signal is less than a preset transmission threshold, a power supply voltage of the relay is increased and the control signal is transmitted again.

According to an alternative embodiment of the second aspect of the present disclosure, in a case that the number of transmission times of the current control signal is greater than or equal to the preset transmission threshold, error information is generated and output.

Preferred embodiments for implementing the present disclosure will be described below in more detail with reference to accompanying drawings, so that the features and advantages of the present disclosure can be easily understood.

### BRIEF DESCRIPTION OF THE DRAWINGS

In order to explain technical solutions of embodiments of the present disclosure more clearly, the accompanying drawings of the embodiments will be briefly introduced below. Obviously, the accompanying drawings in the following description only refer to some embodiments of the present disclosure, but do not limit the present disclosure.
FIG. 1 shows a schematic diagram of a control method 700 according to an exemplary embodiment of the present disclosure;
FIG. 1B shows a schematic diagram of a variation 710 of the control method according to an exemplary embodiment of the present disclosure;
FIG. 2 shows a schematic diagram of a control device 100 according to an exemplary embodiment of the present disclosure, which includes a level conversion circuit 150;
FIG. 2B shows a schematic diagram of a control circuit 130 according to an exemplary embodiment of the present disclosure;
FIG. 3 shows a working timing diagram of the level conversion circuit 150 according to an exemplary embodiment of the present disclosure;
FIG. 4 shows a schematic diagram of a variant of the control device 100 according to an exemplary embodiment of the present disclosure, which includes an interlock circuit 160 and the level conversion circuit 150;
FIG. 5 shows a working timing diagram of the interlock circuit 160 according to an exemplary embodiment of the present disclosure;
FIG. 6 shows a schematic diagram of another variant of the control device 100 according to an exemplary embodiment of the present disclosure, to which a detection circuit 170 is connected.

### DESCRIPTION OF THE EMBODIMENTS

Various embodiments according to the present disclosure will be described in detail with reference to the accompanying drawings. Herein, it should be noted that in the accompanying drawings, the same reference numerals are given to components that basically have the same or similar structure and function, and repeated descriptions about them will be omitted.

In order to make objectives, technical solutions, and advantages of the embodiments of the present disclosure clearer, the technical solutions of the embodiments of the present disclosure will be described clearly and thoroughly in conjunction with the accompanying drawings of the embodiments of the present disclosure. Obviously, the described embodiments are part of, but not all of, the embodiments of the present disclosure. Based on the described embodiments of the present disclosure, all other embodiments obtained by those of ordinary skill in the art without creative labor fall within the protection scope of the present disclosure.

Unless otherwise defined, technical terms or scientific terms used herein shall have common meanings understood by those with ordinary skills in the art to which this disclosure belongs. Words such as "first", "second" and the like used in the present disclosure do not indicate any order, quantity or importance, but are only used to distinguish different components. Similarly, words such as "comprise", "include" and the like mean that elements or items appearing before the words cover elements, items and their equivalents listed after the words, but do not exclude other elements or items. Words such as "connect" or "connected" and the like are not limited to physical or mechanical connections, but may include electrical connections, whether direct or indirect. "Up", "Down", "Left", "Right" and the like are only used to indicate a relative position relationship, and when an absolute position of a described object changes, the relative position relationship may also change accordingly.

As shown in the present application and claims, unless otherwise clearly stated in the context, words such as "a", "an", "one" and/or "the" and the like do not specifically refer to the singular, but may also include the plural. Generally, the terms "comprise" and "include" only suggest that those clearly identified steps and elements are included, while these steps and elements do not constitute an exclusive list, and a method or device may also include other steps or elements.

Although this application makes various references to certain modules in a system according to the embodiments of the application, any number of different modules may be used and run on user terminals and/or servers. The modules are merely illustrative, and different modules may be used for different aspects of the system and method.

In this application, flowcharts are used to illustrate operations performed by the system according to the embodiment of the application. It should be appreciated that the preceding or following operations are not necessarily performed exactly in order. Rather, various steps can be processed in reverse order or at the same time as required. At the same time, other operations may be added to these processes, or one or several operations may be removed from these processes.

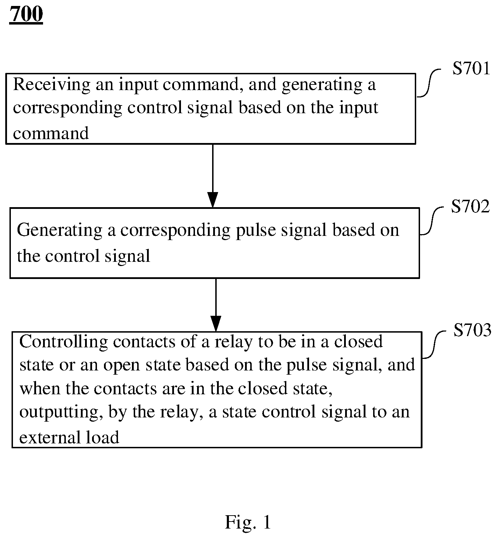

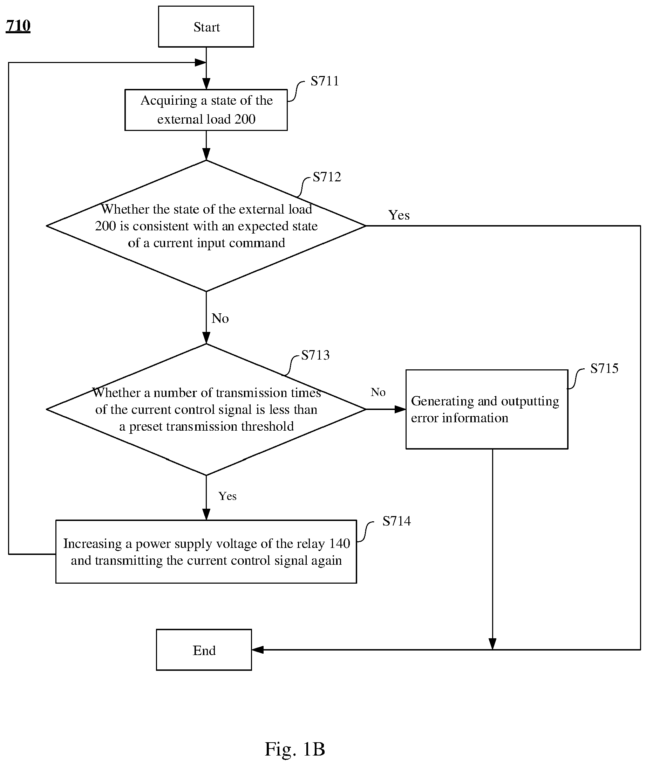

FIG. 1 shows a schematic diagram of a control method 700 according to an exemplary embodiment of the present disclosure.

Referring to FIG. 1, first, in step S701, an input command is received, and a corresponding control signal is generated based on the input command.

The input command may be a command directly input by a user, or may also be a command generated by further processing the user's control instruction. The embodiments of the present disclosure are not limited by the source of the input command.

The generated control signal may be, for example, a voltage control signal, or may also be a current control signal, which may be a continuous signal or a pulse signal, and may adopt a high level or a low level as its effective level. The embodiments of the present disclosure are not limited by the type of the control signal.

After the control signal is generated, in step S702, a corresponding pulse signal is generated based on the control signal, and a duration of an effective level of the pulse signal is less than a pulse time threshold.

The pulse time threshold of the pulse signal (turn-on pulse signal, turn-off pulse signal) is set to avoid the situation where the relay coil is burnt out due to a long duration of the signal (for example, the duration is 10s). The pulse time threshold may be adjusted. For example, the pulse time threshold for both the turn-on pulse signal and the turn-off pulse signal may be set to 20ms, or the pulse time threshold for the turn-on pulse signal may be set to 10ms, and the pulse time threshold for the turn-off pulse signal may be set to 25ms. The present disclosure is not limited by the specific value of the set pulse time threshold.

By setting the pulse time threshold, and setting the duration of the effective level of the generated pulse signal to be less than the pulse time threshold, it is possible to effectively prevent the relay coil from burning out due to the long duration of the control signal, which is beneficial to protection of the relay coil, and can achieve good control of the relay.

Finally, in step S703, contacts of the relay 140 are controlled to be in a closed state or an open state based on the pulse signal, and when the contacts are in the closed state, the relay 140 outputs a state control signal to an external load 200.

The external load 200 may be a single load element, such as a contactor (iCT) or a pulse switch (iTL), and it may also be a load circuit formed by a plurality of load elements in parallel or in series. The embodiments of the present disclosure are not limited by the constitution and structure of the external load.

In some embodiments, when the input command is a turn-on command, a plurality of turn-on control signals are generated and the plurality of turn-on control signals are continuously transmitted at a predetermined time interval to turn on the contacts of the relay 140.

Compared with the situation where only one control signal is transmitted to control the relay to be in the open state, continuously transmitting a plurality of turn-on control signals at a predetermined time interval can effectively realize the state control of the relay, especially when the relay contacts are stuck, which ensures reliable actions of the relay and reduces a failure rate of the relay.

In some embodiments, when the input command is a turn-off command, a plurality of turn-off control signals are generated and the plurality of turn-off control signals are continuously transmitted at a predetermined time interval to turn off the contacts of the relay 140.

Compared with the situation where only one control signal is transmitted to control the relay to be in the closed state, continuously transmitting a plurality of turn-off control signals at a predetermined time interval can effectively realize the state control of the relay and reduce the failure rate of the relay.

FIG. 1B shows a schematic diagram of a variation 710 of the control method according to an exemplary embodiment of the present disclosure.

Referring to 1B, first, in step S711, a state of the external load 200 is acquired.

The state of the external load may be a state signal detected from a detection terminal of the external load, or a contact state signal, a voltage signal, or a current signal of the external load acquired based on the detection circuit. The embodiments of the present disclosure are not limited by the type of acquiring the state of the external load.

Next, in step S712, whether the state of the external load 200 is consistent with an expected state of a current input command is determined.

When the state of the external load 200 is consistent with the expected state of the current input command, for example, this detection process may be ended, or state information of the external load may be updated or reported. The embodiments of the present disclosure are not limited by the specific processing method when the state of the external load is consistent with the expected state of the current input command.

In some embodiments, when the state of the external load 200 is inconsistent with the expected state of the current input command, in step S713, whether the number of transmission times of the current control signal is less than a preset transmission threshold is determined. If the number of transmission times of the current control signal is less than the preset transmission threshold, in step S714, a power supply voltage of the relay 140 is increased and the current control signal is transmitted again. Next, as shown in FIG. 1B, return to step S711 and perform the above-mentioned detection process 710 again, which may be performed multiple times until the state of the external load is consistent with the expected state of the current control signal, or the number of transmission times of the current control signal is greater than or equal to the transmission threshold. If transmission is greater than or equal to the preset transmission threshold, in step S715, error information is generated and output, and this detection process is ended.

The preset transmission threshold may be 3 or 5, or may also be other values, and the embodiments of the present disclosure are not limited by the specific value of the preset transmission threshold.

For example, when the preset transmission threshold is 4 and the control signal is transmitted once, two control signals will be transmitted continuously. After one transmission is performed, if the received state of the external load is inconsistent with the expected state of the current control signal, since the number of times the current control signal is transmitted is 1, which is less than the preset transmission threshold of 4, a voltage output from the power module to the relay is increased, and the transmission process of the current control signal is performed once again, that is, two control signals are continuously transmitted.

When the load state is inconsistent with the expected state, by increasing an interaction force between the relay contacts by increasing the output voltage of the power supply, and repeatedly transmitting the current control signal, control of the relay state can be effectively realized, especially when the relay contacts are stuck, which helps to open the stuck contacts.

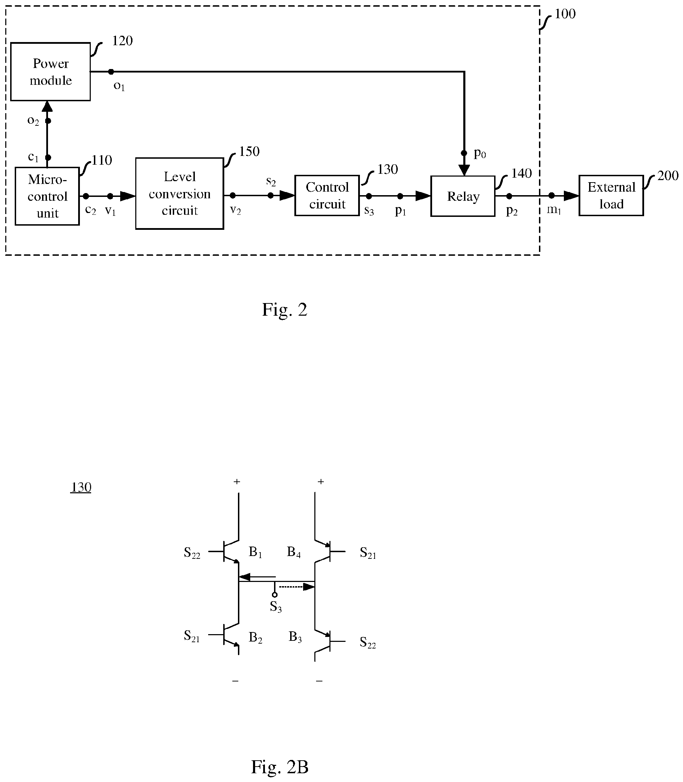

FIG. 2 shows a schematic diagram of a control device 100 according to an exemplary embodiment of the present disclosure.

Referring to FIG. 2, it can be seen that the control device 100 is connected with an external load 200, and the control device 100 includes a micro-control unit 110, a power module 120, a control circuit 130, and a relay 140.

The power module 120 may be, for example, a DC power supply or an AC power supply, and the embodiments of the present disclosure are not limited by the type of the power supply.

The micro-control unit 110 is configured to receive an input command. The input command is, for example, a local input command, such as an operating instruction entered by the user or a command inputted by the user through operating keys or knobs, or a central input command, such as an input command from a main control unit. The embodiments of the present disclosure are not limited by the type of the input command.

The micro-control unit 110 may receive the input command, for example, in a wired manner, or it may also receive the input command in a wireless manner, for example, through Zigbee communication, Ethernet, mobile communication technology, or through General Packet Radio Service (GPRS) technology. The embodiments of the present disclosure are not limited by the manner in which the micro-control unit receives the input command.

A power control output terminal c₁ of the micro-control unit 110 is connected to a control input terminal o₂ of the power module 120, and is configured to control an output voltage of the power module to the relay.

The control circuit may be, for example, a bridge circuit, such as an H-bridge circuit, or it may also be a control circuit of other forms or structures. The embodiments of the present disclosure are not limited by the constitution and structure of the control circuit.

A signal input terminal s₂ of the control circuit 130 is connected to a signal output terminal c₂ of the micro-control unit 110, so that the control circuit can receive a control signal from the micro-control unit via the signal input terminal s₂.

The relay 140 has contacts, its power input terminal p₀ is connected to a power output terminal o₁ of the power module 120, and the relay is powered by the power module; its control input terminal p₁ is connected to a signal output terminal s₃ of the control circuit 130, and a control signal received by the control input terminal p₁ controls the contacts to be in a closed state or an open state; the relay 140 also has a signal output terminal p₂, its signal output terminal p₂ is connected to an input terminal m₁ of the external load 200, and when the contacts are in the closed state, the signal output terminal p₂ of the relay 140 outputs a state control signal to the external load 200.

For example, when the relay contacts are in the closed state, the state control signal of the signal output terminal p₂ controls the external load to be in a working state, which is powered on and performs a corresponding function; when the relay contacts are in the open state, the signal output terminal p₂ does not output the state control signal, and the external load is in a dormant state, which will not be powered on and will no longer perform the corresponding function. Alternatively, it can also be set that, when the relay contacts are in the closed state, the state control signal of the signal output terminal p₂ controls the external load to be in a first working state, which runs with higher power consumption and performs various tasks; when the relay contacts are in the closed state, the signal output terminal p₂ does not output the state control signal, and the external load is in a second working state, which runs with lower power consumption and only performs specific tasks. The embodiments of the present disclosure are not limited by the specific working state and working content of the external load.

FIG. 2B shows a schematic diagram of the control circuit 130 according to an exemplary embodiment of the present disclosure.

Referring to FIG. 2B, the above process may be described in more detail. For example, when the control circuit is an H-bridge circuit, it may have 4 bridge arms, which are B1, B2, B3, and B4, respectively, and its signal input terminal s₂ includes a turn-on signal input terminal s₂₁ and a turn-off signal input terminal s₂₂. When it receives a turn-on control signal from the micro-control unit at the turn-on signal input terminal s₂₁, that is, when its turn-on signal input terminal s₂₁ receives a high level, the bridge arms B2 and B4 are turned on, the signal output terminal s₃ of the control circuit outputs a turn-on signal at this time, that is, the current signal as shown by the solid arrow in FIG. 2B, and the relay controls its relay contacts to be in the open state in response to the received turn-on signal; when it receives a turn-off control signal from the micro-control unit at the turn-off signal input terminal s₂₂, that is, when its turn-off signal input terminal s₂₂ receives a high level, the bridge arms B1 and B3 are turned on, the signal output terminal s₃ of the control circuit outputs a turn-off signal at this time, that is, the current signal as shown by the dashed arrow in FIG. 2B, and the relay controls its relay contacts to be in a closed state in response to the received turn-off signal.

A level conversion circuit 150 is further provided between the micro-control unit 110 and the control circuit 130, and a signal input terminal v₁ of the level conversion circuit 150 is connected to the signal output terminal c₂ of the micro-control unit 110, and a pulse output terminal v₂ of the level conversion circuit 150 is connected to the signal input terminal s₂ of the control circuit 130. The level conversion circuit is configured to convert continuous control signals from the micro-control unit into corresponding pulse signals, and a duration of an effective level of the pulse signals is less than a pulse time threshold.

The level conversion circuit may include, for example, a mono-stable flip-flop to convert a control signal into a corresponding pulse signal, or achieve the function of level conversion by using a combination of multiple electronic means. The present disclosure is not limited by the circuit structure and constitution of the level conversion circuit.

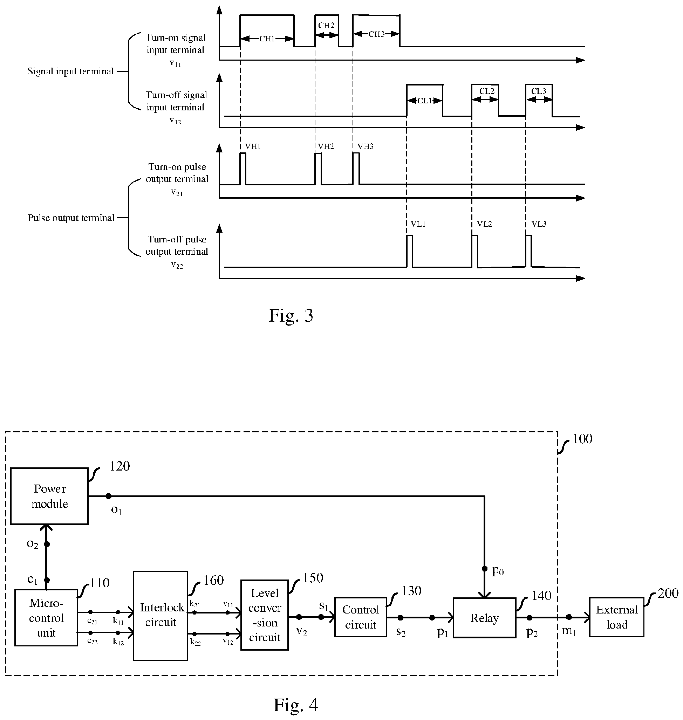

FIG. 3 shows a schematic timing diagram of the level conversion circuit 150 according to an exemplary embodiment of the present disclosure.

In connection with FIG. 2 and FIG. 3, the above-mentioned level conversion circuit may be described in more detail. For example, when the control circuit is the H-bridge circuit shown in FIG. 2B, the signal output terminal c₂ of the micro-control unit 110 includes a turn-on signal output terminal c₂₁ and a turn-off signal output terminal c₂₂, where the turn-on signal output terminal c₂₁ outputs a turn-on control signal, and the turn-off signal output terminal c₂₂ outputs a turn-off control signal. The signal input terminal v₁ of the level conversion circuit 150 includes a turn-on signal input terminal v₁₁ and a turn-off signal input terminal v₁₂, which are respectively configured to receive a turn-on control signal and a turn-off control signal; the pulse output terminal v₂ of the level conversion circuit 150 includes a turn-on pulse output terminal v₂₁ and a turn-off pulse output terminals v₂₂, which are respectively configured to output a turn-on and turn-off pulse signals, to realize control of the control circuit, and all of the above-mentioned signals adopt a high level as their effective level.

When the turn-on signal input terminal v₁₁ of the level conversion circuit 150 receives a plurality of continuous turn-on control signals CH1, CH2, and CH3 from the micro-control unit 110, where the turn-on control signal CH1 lasts for 100ms, for example, the level conversion circuit 150 will generate a plurality of corresponding turn-on pulse signals VH1, VH2, VH3 and continuously output the plurality of turn-on pulse signals to the control circuit 130 via the turn-on pulse output terminal v₂₁, where the generated turn-on pulse signal VH1 lasts for 10ms, for example. And for each turn-on control signal, for example, taking the turn-on control signal CH1 as an example, after the corresponding turn-on pulse signal VH1 is generated, the level conversion circuit 150 will no longer output a turn-on pulse signal during the duration of the turn-on control signal CH1, until the subsequent turn-on control signals CH2 and CH3 arrive, and the level conversion circuit 150 generates corresponding pulse signals VH2 and VH3.

Further, when the turn-off signal input terminal v₁₂ of the level conversion circuit 150 receives a plurality of continuous turn-off control signals CL1, CL2, CL3 from the micro-control unit 110, where the turn-off control signal CL1 lasts for 60ms, for example, the level conversion circuit 150 will generate a plurality of corresponding turn-off pulse signals VL1, VL2, VL3 and continuously output the plurality of turn-off pulse signals to the control circuit 130 via the turn-off pulse output terminal v₂₂, where the generated turn-off pulse signal VL1 lasts for 10ms, for example. And for each turn-off control signal, for example, taking the turn-off control signal CL1 as an example, after the corresponding turn-off pulse signal VL1 is generated, the level conversion circuit 150 will no longer output a turn-off pulse signal within the duration of the turn-off control signal CL1, until the subsequent turn-off control signals CL2 and CL3 arrive, and the level conversion circuit 150 generates corresponding turn-off pulse signals VL2 and VL3.

By setting a level conversion circuit to convert a control signal from the micro-control unit to a pulse signal, and further setting the effective level of the pulse signal to be less than the pulse time threshold, the situation where the relay coil is burnt out due to the micro-control unit transmitting high-level signals for a long time is effectively avoided, which is beneficial to protection of the relay.

In some embodiments, when the input command is a turn-on command, the micro control unit 110 continuously transmits a plurality of turn-on control signals to the level conversion circuit 150 at a predetermined time interval, the level conversion circuit 150 receives the plurality of continuous turn-on control signals and continuously transmits a plurality of turn-on pulse signals to the control circuit 120 at a predetermined time interval, the control circuit 120 receives the plurality of continuous turn-on pulse signals and continuously transmits a plurality of turn-on signals to the relay 140, and the relay 140 turns on the contacts of the relay 140 in response to the plurality of continuous turn-on signals.

The predetermined time interval may be, for example, 10ms or 15ms. The continuous transmission of a plurality of turn-on control signals may be, for example, continuous transmission of three turn-on control signals, or continuous transmission of five turn-on control signals. The present disclosure is not limited by the duration of the predetermined time interval and the specific number of continuous transmissions of the turn-on control signals.

Compared with the situation where only one control signal is transmitted to control the relay to be in the open state, continuously transmitting a plurality of turn-on control signals at a predetermined time interval can effectively realize the state control of the relay, especially when the relay contacts are stuck, which ensures reliable actions of the relay and reduces the failure rate of the relay.

In some embodiments, when the input command is a turn-off command, the micro control unit 110 continuously transmits a plurality of turn-off control signals to the level conversion circuit 150 at a predetermined time interval, the level conversion circuit 150 receives the plurality of continuous turn-off control signals and continuously transmits a plurality of turn-off pulse signals to the control circuit 120 at a predetermined time interval, the control circuit 120 receives the plurality of continuous turn-off pulse signals and continuously transmits a plurality of turn-off signals to the relay 140, and the relay 140 turns off the contacts of the relay 140 in response to the plurality of continuous turn-off signals.

The predetermined time interval may be, for example, 10ms or 15ms. The continuous transmission of a plurality of turn-off control signals may be, for example, continuous transmission of three turn-off control signals, or continuous transmission of five turn-off control signals. The present disclosure is not limited by the duration of the predetermined time interval and the specific number of continuous transmissions of the turn-off control signals.

Compared with the situation where only one turn-off control signal is transmitted to control the relay to be in the closed state, continuously transmitting a plurality of turn-off control signals at a predetermined time interval can effectively realize the state control of the relay, which ensures reliable actions of the relay and reduces the failure rate of the relay.

FIG. 4 shows a schematic diagram of a variant of the control device 100 according to an exemplary embodiment of the present disclosure, which includes an interlock circuit 160.

Referring to FIG. 4, in some embodiments, a signal output terminal c₂ of the micro-control unit 110 includes a turn-on signal output terminal c₂₁ and a turn-off signal output terminal c₂₂, and a signal input terminal v₁ of the level conversion circuit 150 includes a turn-on signal input terminal v₁₁ and a turn-off signal input terminal v₁₂, and an interlock circuit 160 is also provided between the micro-control unit 110 and the level conversion circuit 150.

A turn-on signal input terminal k₁₁ of the interlock circuit 160 is connected to the turn-on signal output terminal c₂₁ of the micro-control unit 110, and a turn-off signal input terminal k₁₂ of the interlock circuit 160 is connected to the turn-off signal output terminal c₂₂ of the micro-control unit 110, a turn-on signal output terminal k₂₁ of the interlock circuit 160 is connected to the turn-on signal input terminal v₁₁ of the level conversion circuit 150, a turn-off signal output terminal k₂₂ of the interlock circuit 160 is connected to the turn-off signal input terminal v₁₂ of the level conversion circuit 150, and at least one of the turn-on signal output terminal k₂₁ and the turn-off signal output terminal k₂₂ of the interlock circuit 160 is in a locked state without outputting a control signal.

According to the above features, the interlock circuit is provided between the micro-control unit and the level conversion circuit, on the basis of realizing protection of the relay through pulse signals, by further setting the interlock circuit and setting at least one of its turn-on signal output terminal and turn-off signal output terminal in a locked state without outputting a control signal, circuit damage caused by turn-on and turn-off control signals that are mutually exclusive being output to the control circuit at the same time can be effectively prevented, especially when a bridge circuit is used to achieve circuit control, the interlock circuit can effectively prevent a unilateral bridge arm of the bridge circuit from short-circuiting when turn-on and turn-off control signals are output to the bridge circuit at the same time, which is beneficial to realize protection of the control circuit and the relay, thereby improving reliability of the control device.

In some embodiments, when the turn-on signal input terminal k₁₁ receives a turn-on control signal, the turn-on signal output terminal k₂₁ works during the turn-on control signal, and the interlock circuit 160 locks the turn-off signal output terminal k₂₂ so that the turn-off signal output terminal k₂₂ will not output a control signal.

More detailed description may be provided. For example, when only the turn-on signal input terminal k₁₁ receives a turn-on control signal, only the turn-on signal output terminal k₂₁ works at this time, and the turn-off signal output terminal k₂₂ of the interlock circuit does not work and will not output a turn-off control signal. After the turn-on signal input terminal k₁₁ receives the turn-on control signal, when the turn-off signal input terminal k₁₂ receives a turn-off control signal during the turn-on control signal, the turn-on signal output terminal k₂₁ works at this time, and the interlock circuit 160 will lock the turn-off signal output terminal k₂₂ so that the turn-off signal output terminal k₂₂ will not output a control signal.

When the turn-off signal input terminal k₂₁ receives a turn-off control signal, the turn-off signal output terminal k₂₂ works during the turn-off control signal, and the interlock circuit 160 locks the turn-on signal output terminal k₂₁ so that the turn-on signal output terminal k₂₁ will not output a control signal.

More detailed description may be provided. For example, when only the turn-off signal input terminal k₁₂ receives a turn-off control signal, only the turn-off signal output terminal k₂₂ works at this time, and the turn-off signal output terminal k₂₂ of the interlock circuit does not work and will not output a turn-off control signal. After the turn-off signal input terminal k₁₂ receives the turn-off control signal, when the turn-on signal input terminal k₁₁ receives a turn-on control signal during the turn-off control signal, the turn-off signal output terminal k₂₂ works at this time, and the interlock circuit 160 will lock the turn-on signal output terminal k₂₁ so that the turn-on signal output terminal k₂₁ will not output a control signal.

When a turn-on control signal is received at the turn-on signal input terminal k₁₁ and a turn-off control signal is received at the turn-off signal input terminal k₁₂ at the same time, the interlock circuit 160 locks the turn-on signal output terminal k₂₁ and the turn-off signal output terminal k₂₂, so that neither the turn-on signal output terminal k₂₁ nor the turn-off signal output terminal k₂₂ outputs a control signal.

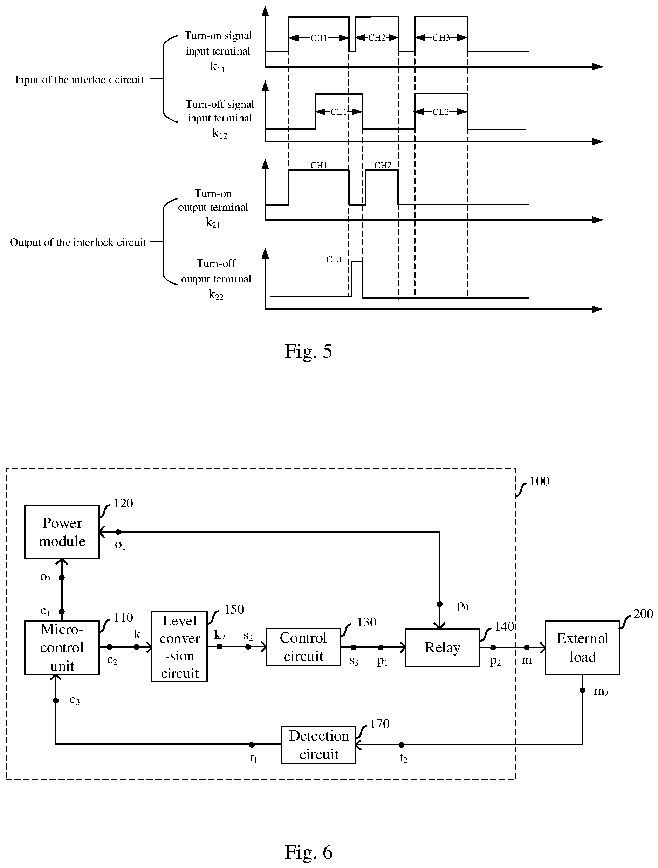

FIG. 5 shows a timing diagram of the interlock circuit 160 according to an exemplary embodiment of the present disclosure.

Referring to FIG. 5, the above-mentioned interlock circuit may be described in more detail. The interlock circuit 160 is formed of, for example, multiple NAND gates, capacitors, and resistors, and control signals (turn-on control signals, turn-off control signals) from the micro-control unit 110 and output signals of the interlocking circuit 160 all adopt, for example, a high level as their effective level.

When only the turn-on signal input terminal k₁₁ of the interlock circuit 160 receives a turn-on control signal CH1 from the micro-control unit 110, at this time, the turn-on signal output terminal k₂₁ works and outputs the turn-on control signal CH1, and the turn-off signal output terminal k₂₂ does not work and will not output a control signal. Subsequently, during the duration of the turn-on control signal CH1, when the turn-off signal input terminal k₁₂ receives a turn-off control signal CL1, the turn-on signal output terminal k₂₁ of the interlock circuit 160 is still in a working state and outputs the turn-on control signal CH1, and the interlock circuit locks the turn-off signal output terminal k₂₂, so that during the turn-on control signal, even if the interlock circuit receives a turn-off control signal again, the interlock circuit will not output the turn-off control signal.

When the turn-on control signal CH1 ends, at this time, only the turn-off signal input terminal k₁₂ of the interlock circuit receives the turn-off control signal CL1, and at this time, in response to the turn-off control signal CL1, the turn-off signal output terminal k₂₂ is caused to work and output the turn-off control signal CL1, and the turn-on signal control terminal does not work and will not output a control signal. During the duration of the turn-off control signal CL1, even if the turn-on signal input terminal k₁₁ receives a turn-on control signal CH2 again, the interlock circuit 160 still keeps the turn-off signal output terminal k₂₂ working, outputs the turn-off control signal CL1, and locks the turn-on signal output terminal k₂₁ so that the turn-on signal output terminal k₂₁ will not output the turn-on control signal, that is, during the turn-off control signal, even if the interlock circuit receives a turn-on control signal again, the interlock circuit will not output the turn-on control signal.

When a turn-on control signal CH3 is received at the turn-on signal input terminal k₁₁ and a turn-off control signal CL2 is received at the turn-off signal input terminal k₁₂ at the same time, the interlock circuit 160 locks the turn-on signal output terminal k₂₁ and the turn-off signal output terminal k₂₂, so that neither the turn-on signal output terminal k₂₁ nor the turn-off signal output terminal k₂₂ outputs a control signal.

According to the above features, by setting the working mode of the interlock circuit in three different situations, it is effectively avoided, in various control situations, that the control circuit receives a turn-on control signal and a turn-off control signal at the same time resulting in control error or even damage of the control circuit, which is beneficial to protection of the control circuit and the relay, thereby improving reliability of the control device.

In some embodiments, referring to FIG. 5, the interlock circuit may be further configured with a hysteresis effect through RC discharge and the NAND gate, so that when the turn-on control signal CH1 is not completely turned off, the turn-off control signal CL1 will not be output immediately; and when the turn-off control signal CL1 is not completely turned off, the turn-on control signal CH2 will not be output immediately. Thereby, it can prevent the control error and damage of the control circuit caused by the simultaneous output of the mutually exclusive turn-on control signal and turn-off control signal.

FIG. 6 shows a schematic diagram of another variant of the control device 100 according to an exemplary embodiment of the present disclosure, to which a detection circuit 170 is connected.

Referring to FIG. 6, the control device further includes a detection circuit 170, where a detection output terminal t₁ of the detection circuit 170 is connected to a feedback input terminal c₃ of the micro-control unit 110, a detection input terminal t₂ of the detection circuit 170 is connected to a detection terminal m₂ of the external load 200, and the detection circuit 170 is configured to feed back a state of the external load 200 to the micro-control unit 110.

The detection circuit, for example, may feed back a working state of the external load, for example, it may feed back that the external load is in a powered-on working state or in a dormant non-working state, or it may also feed back a working mode of the external load, for example, it may feed back that the external load is in a first working mode with high energy consumption or in a second working mode with low energy consumption. In addition, the detection circuit may feed back an overall condition of the external load, or only a partial condition of the external load. The present disclosure is not limited by the specific content detected and fed back by the detection circuit.

By setting the detection circuit to feed back the state of the external load status to the micro-control unit in real time to form a closed loop, the micro-control unit can recognize the load state in time, and adjust control signals of the control device based on the load state, which is beneficial to reliable control of the control device to the load.

In some embodiments, when the state of the external load 200 received by the micro-control unit 110 is consistent with an expected state of a current control signal of the micro-control unit 110, this detection may be ended, for example, or this detection may be ended after updating or reporting state information of the external load. The embodiments of the present disclosure are not limited by the specific processing method when the state of the external load is consistent with the expected state of the current input command.

In some embodiments, when the state of the external load 200 received by the micro-control unit 110 is inconsistent with the expected state of the current control signal of the micro-control unit 110, the micro-control unit 110 transmits error information to a main control unit.

When the expected state of the current control signal is inconsistent, by transmitting the error information to the main control unit through the micro-control unit, the main control unit can learn the current control state and respond in time, which helps to deal with the error information in time and improve robustness of the control.

In some embodiments, when the state of the external load 200 received by the micro-control unit 110 is inconsistent with the expected state of the current control signal of the micro-control unit 110, the micro-control unit 110 will compare a number of transmission times of the current control signal with a preset transmission threshold, if the number of transmission times of the current control signal is less than the preset transmission threshold, the micro-control unit 110 will control the power module 120 to increase the voltage output from the power module to the relay, and the micro-control unit 110 will perform transmission of the current control signal again. After transmitting the current control signal again, the control device may perform the above-mentioned detection process again, that is, acquiring the state of the external load by the detection circuit, determining it and perform corresponding processing based on the determination result by the micro-control unit. This process can be performed multiple times, until the state of the external load is consistent with the expected state of the current control signal or the number of transmission times of the current control signal is greater than or equal to the transmission threshold.

The preset transmission threshold may be 3 or 5, or may also be other values. The embodiments of the present disclosure are not limited by the specific value of the preset transmission threshold.

For example, when the preset transmission threshold is 4, and the micro-control unit transmits the control signal once, two control signals will be transmitted continuously. After the micro-control unit performs one transmission, if the received state of the external load is inconsistent with the expected state of the current control signal, since the number of times the micro-control unit transmits the current control signal is 1, which is less than the preset transmission threshold of 4, the micro-control unit will control the power module 120 to increase the voltage output from the power module to the relay, and perform the transmission process of the current control signal again, that is, transmit two control signals continuously.

When the load state is inconsistent with the expected state, by increasing an interaction force between the relay contacts by increasing the output voltage of the power supply, and repeatedly transmitting the current control signal, control of the relay state can be effectively realized, especially when the relay contacts are stuck, which helps to open the stuck contacts.

In some embodiments, if the number of transmission times of the current control signal is greater than or equal to the preset transmission threshold, the micro-control unit 110 transmits error information to the main control unit.

When increasing the output voltage of the power supply and repeatedly transmitting a predetermined number of control signals does not solve the current problem, transmitting the error information to the main control unit by the micro-control unit facilitates the main control unit to process it in real time.

The control device proposed in the present disclosure has been described in detail above with reference to preferred embodiments. However, those skilled in the art will appreciated that various modifications and variations can be made to the above specific embodiments without departing from the spirit of the present disclosure, and multiple combinations of various technical features and structures proposed in the present disclosure can be made without going beyond the scope of the present disclosure.

## Claims

1. A control method, the method comprising:
receiving an input command, and generating a corresponding control signal based on the input command;
generating a corresponding pulse signal based on the control signal, a duration of an effective level of the pulse signal is less than a pulse time threshold;
controlling contacts of a relay (140) to be in a closed state or an open state based on the pulse signal, and when the contacts are in the closed state, outputting, by the relay (140), a state control signal to an external load (200).

2. The control method of claim 1, wherein when the input command is a turn-on command, a plurality of turn-on control signals are generated and the plurality of turn-on control signals are continuously transmitted at a predetermined time interval to turn on the contacts of the relay (140).

3. The control method of claim 1, wherein when the input command is a turn-off command, a plurality of turn-off control signals are generated and the plurality of turn-off control signals are continuously transmitted at a predetermined time interval to turn off the contacts of the relay (140).

4. The control method of claim 1, further comprising:
acquiring a state of the external load (200);
determining whether the state of the external load (200) is consistent with an expected state of a current input command.

5. The control method of claim 4, wherein:
when the state of the external load (200) is inconsistent with the expected state of the current input command, and in a case that a number of transmission times of the current control signal is less than a preset transmission threshold, a power supply voltage of the relay (140) is increased and the control signal is transmitted again.

6. The control method of claim 5, wherein:
in a case that the number of transmission times of the current control signal is greater than or equal to the preset transmission threshold, error information is generated and output.

7. A control device (100), wherein the control device (100) is connected with an external load (200) and comprises:
a power module (120);
a micro-control unit (110) that receives an input command and has a power control output terminal (c₁) connected to a control input terminal (o₂) of the power module (120);
a control circuit (130) with a signal input terminal (s₂) connected to a signal output terminal (c₂) of the micro-control unit (110);
a relay (140) with contacts, a power input terminal (p₀) connected to a power output terminal (o₁) of the power module (120), a control input terminal (p₁) connected to a signal output terminal (s₃) of the control circuit (130), and a signal output terminal (p₂) connected to an input terminal (m₁) of the external load (200), a control signal of the control input terminal (p₁) controlling the contacts to be in a closed state or an open state, and when the contacts are in the closed state, the signal output terminal (p₂) of the relay (140) outputting a state control signal to the external load;
wherein a level conversion circuit (150) is further provided between the micro-control unit (110) and the control circuit (130), a signal input terminal (v₁) of the level conversion circuit (150) is connected to a signal output terminal (c₂) of the micro-control unit (110), and a pulse output terminal (v₂) of the level conversion circuit (150) is connected to the signal input terminal (s₂) of the control circuit (130), the level conversion circuit (150) is configured to convert the control signal from the micro-control unit into a pulse signal, and a duration of an effective level of the pulse signal is less than a pulse time threshold.

8. The control device (100) of claim 7, wherein when the input command is a turn-on command, the micro-control unit (110) continuously transmits a plurality of turn-on control signals to the level conversion circuit (150) at a predetermined time interval, the level conversion circuit (150) receives the plurality of continuous turn-on control signals and continuously transmits a plurality of turn-on pulse signals to the control circuit (120) at a predetermined time interval, the control circuit (120) receives the plurality of continuous turn-on pulse signals and continuously transmits a plurality of turn-on signals to the relay (140), and the relay (140) turns on the contacts of the relay (140) in response to the plurality of continuous turn-on signals.

9. The control device (100) of claim 7, wherein when the input command is a turn-off command, the micro-control unit (110) continuously transmits a plurality of turn-off control signals to the level conversion circuit (150) at a predetermined time interval, the level conversion circuit (150) receives the plurality of continuous turn-off control signals and continuously transmits a plurality of turn-off pulse signals to the control circuit (120) at a predetermined time interval, the control circuit (120) receives the plurality of continuous turn-off pulse signals and continuously transmits a plurality of turn-off signals to the relay (140), and the relay (140) turns off the contacts of the relay (140) in response to the plurality of continuous turn-off signals.

10. The control device (100) of claim 7, wherein the signal output terminal (c₂) of the micro-control unit (110) includes a turn-on signal output terminal (c₂₁) and a turn-off signal output terminal (c₂₂), the signal input terminal (v₁) of the level conversion circuit (150) includes a turn-on signal input terminal (v₁₁) and a turn-off signal input terminal (v₁₂), and an interlock circuit (160) is further provided between the micro-control unit (110) and the level conversion circuit (150),
wherein a turn-on signal input terminal (k₁₁) and a turn-off signal input terminal (k₁₂) of the interlock circuit (160) are respectively connected to the turn-on signal output terminal (c₂₁) and the turn-off signal output terminal (c₂₂) of the micro-control unit (110), a turn-on signal output terminal (k₂₁) and a turn-off signal output terminal (k₂₂) of the interlock circuit (160) are respectively connected to the turn-on signal input terminal (v₁₁) and the turn-off signal input terminal (v₁₂) of the level conversion circuit (150), and at least one of the turn-on signal output terminal (k₂₁) and the turn-off signal output terminal (k₂₂) of the interlock circuit is in a locked state without outputting a control signal.

11. The control device (100) of claim 10, wherein:
when the turn-on signal input terminal (k₁₁) receives a turn-on control signal, the turn-on signal output terminal (k₂₁) works during the turn-on control signal, and the interlock circuit (160) locks the turn-off signal output terminal (k₂₂) so that the turn-off signal output terminal (k₂₂) will not output a control signal;
when the turn-off signal input terminal (k₁₂) receives a turn-off control signal, the turn-off signal output terminal (k₂₂) works during the turn-off control signal, and the interlock circuit (160) locks the turn-on signal output terminal (k₂₁) so that the turn-on signal output terminal (k₂₁) will not output a control signal;
when a turn-on control signal is received at the turn-on signal input terminal (k₁₁) and a turn-off control signal is received at the turn-off signal input terminal (k₁₂) at the same time, the interlock circuit (160) locks the turn-on signal output terminal (k₂₁) and the turn-off signal output terminal (k₂₂), so that neither the turn-on signal output terminal (k₂₁) nor the turn-off signal output terminal (k₂₂) outputs a control signal.

12. The control device (100) of claim 7, wherein the control device further comprises a detection circuit (170),
wherein a detection output terminal (ti) of the detection circuit (170) is connected to a feedback input terminal (c₃) of the micro-control unit (110), a detection input terminal (t₂) of the detection circuit (170) is connected to a detection terminal (m₂) of the external load (200), and the detection circuit (170) is configured to feed back a state of the external load (200) to the micro-control unit (110).

13. The control device (100) of claim 12, wherein the micro-control unit (110) determines whether the received state of the external load (200) is consistent with an expected state of a current control signal of the micro-control unit (110), and when it is determined that the state of the external load (200) is inconsistent with the expected state of the current control signal of the micro-control unit (110), the micro-control unit (110) transmits error information to a main control unit.

14. The control device (100) of claim 13, wherein the micro-control unit (110) determines whether the received state of the external load (200) is consistent with the expected state of the current control signal of the micro-control unit (110), and when it is determined that the state of the external load (200) is inconsistent with the expected state of the current control signal of the micro-control unit (110):
the micro-control unit (110) compares a number of transmission times of the current control signal with a preset transmission threshold, and if the number of transmission times of the current control signal is less than the preset transmission threshold, the micro-control unit outputs a signal to the power module (120) to increase an output voltage, the power module increases the voltage output to the relay (140) in response to the signal; and the micro-control unit (110) transmits the current control signal to the control circuit (130) again.

15. The control device (100) according to claim 14, wherein if the number of transmission times of the current control signal is greater than or equal to the preset transmission threshold, the micro-control unit (110) transmits the error information to the main control unit.
